# EUROPÄISCHE PATENTSCHRIFT

(11) **EP 2 295 240 B1**
(45) Veröffentlichungstag und Bekanntmachung des Hinweises auf die Patenterteilung: **07.11.2012**
(21) Anmeldenummer: 10170172.0
(22) Anmeldetag: 20.07.2010
(51) Int. Cl.: B32B 21/06, B32B 21/10, E04F 15/02, E04F 15/10, E04F 15/20, B32B 37/10, B32B 38/00

(54) **Verfahren zum Herstellen eines schalldämmenden Paneels**
Method for producing a sound absorbing panel
Procédé de fabrication d'un panneau isolant

(43) Veröffentlichungstag der Anmeldung: 16.03.2011
(73) Patentinhaber: Flooring Technologies Ltd., Pieta PTA 9044 (MT)
(72) Erfinder:
(74) Vertreter: Kalkoff & Partner

(56) Entgegenhaltungen:
- EP-A1- 1 627 977
- DE-C1- 10 151 614
- DE-U1- 20 207 218

## Beschreibung

Die Erfindung betrifft ein Verfahren zum Herstellen eines schalldämmenden Paneels.

Laminatfussboden wird aus laminierten Paneelen zusammengesetzt. Eine Trägerplatte aus Holzwerkstoff, z. B. HDF oder MDF, mit einem unmittelbar auflaminierten Dekor (dem Dekorpapier und dem Overlay) auf der Oberseite und einem Gegenzug, der ein Verziehen und Verwinden der Trägerplatte verhindert, wird zu einem häufig verwendeten Fußbodenbelag verarbeitet. Gegenzug, Trägerplatte und Overlay sowie das ggf. zwischen Overlay und Trägerplatte angeordnete Dekorpapier werden in einer Kurztaktpresse aufeinander geschichtet. Die erhitzten Pressbleche wirken unmittelbar auf Overlay und Gegenzug ein und bewirken das Aushärten der darin enthaltenen Kunstharze, meist Duroplasten jeweils auf und mit der Oberseite und der Unterseite der Trägerplatte. Die Holzwerkstoffplatte ist nun versiegelt und nach dem ggf. vorgesehenen Aufteilen in Paneele und Fräsen der Kantenprofile gebrauchsfertig. Laminatfussboden kann durch Verleimen von Paneelen hergestellt werden; typisch ist jedoch das leimlose Verlegen von Paneelen mit profilierten Kanten.

Zu den wenigen Nachteilen des Laminatfußbodens zählen die als unzureichend empfundenen akustischen Eigenschaften. Laminatfussboden hat aufgrund seines mehrschichtigen Aufbaus aus unterschiedlich dichten und dicken Schichten schlechte schalldämmende Eigenschaften. Der Impuls harter Absätze auf der Oberseite, dem Overlay wird nur wenig gedämpft. Zwischen Laminat und Boden eingeschlossene Sand- oder Staubpartikel führen ebenfalls zu unerwünschten akustischen Effekten.

Verschiedene Maßnahmen zur Verbesserung der Schalldämmung sind bekannt. Zum einen sind Akustikmatten bekannt, die z. B. aus geschäumtem Kunststoff, aus Kork oder lignocellulosehaltigen Fasern bestehen. Diese Matten werden auf dem Unterboden ausgerollt, auf dem der Laminatfussboden bzw. die Paneele, aus denen der Laminatfussboden zusammengesetzt wird, verlegt werden.

Um das Verlegen einer separaten Akustikmatte zu vermeiden, werden auch Paneele mit einer integrierten Schalldämmung angeboten, die insbesondere die Raumschalldämmung verbessert. In einer einfachen Ausführung wird gemäß der WO 2007/145 572 vorgeschlagen, den Gegenzug abschnittsweise zu verdichten. Der schalldämmende Effekt ist begrenzt. Andere Paneele mit integrierter Schalldämmung werden nach der Herstellung des durch Overlay und Gegenzug versiegelten Paneels in der Kurztaktpresse in einem zweiten Bearbeitungsschritt und in einer zweiten Anlage mit weiteren Dämmschichten versehen. Aber auch unlaminierte Paneele werden mit schalldämmenden Schichten versehen. Bekannt sind aufgeklebte Kunststoffmatten (DE 10 2005 031 187), Papiere, Pappen (DE 10 2004 056 540) und auch in flüssiger Form aufkaschiert Kunststoffe. Diese Ausführung wird bspw. in der EP 1898 025 offenbart. Auch die EP 1 627 977 Ai offenbart ein Verfahren zum Herstellen eines Paneels mit schalldämmender Isolierschicht, in dem der Gegenzug und die schallisolierende Schicht in einem gesonderten Herstellungsverfahren vor dem Verpressen zu einem Laminat miteinander verbunden. Hierzu sind zusätzliche Klebeschichten oder das Tränkharz des Gegenzuges verwendbar.

Nachteilig an diesen Paneelen ist, dass das nachträgliche Aufbringen der Schalldämmung mit hohem Aufwand verbunden ist. Außerdem besteht das Risiko, dass bei nachträglich auf Paneele aufgeklebten Matten die Matten mit Untermaß bezogen auf die Unterseite des Paneels bemessen sind, um Überstände zu vermeiden, die das Verlegen des Paneels behindern. Dadurch entstehen aber Hohlräume, die die akustische Dämmwirkung beeinträchtigen.

Die DE 101 51 614 C1 und die DE 202 07 218 U1 offenbaren ein Verfahren zum Herstellen eines Paneels, bei dem die Dämmschicht unterhalb des Gegenzuges und in einem Verfahrensschritt mit den Laminatschichten verpresst wird. Hierbei können sowohl glatte Pressbleche ( DE 101 15 614) als auch strukturierte Pressbleche (DE 202 07 218 U1) oder auch mehrlagige Dämmschichten verwendet werden.

Diese Verfahren sind gegenüber dem mehrstufigen Verfahren deutlich wirtschaftlicher, weisen jedoch gegenüber Herstellungsverfahren ohne integrierte Dämmschicht deutlich längere Presszeiten auf.

Es ist Aufgabe der Erfindung, ein Verfahren zum einfachen und wirtschaftlichen Herstellen von schalldämmenden Paneelen vorzuschlagen.

Diese Aufgabe wird gelöst mit einem Verfahren nach Anspruch 1.

Das erfindungsgemäße Verfahren zum Herstellen eines schalldämmenden Paneels mit
- einem Overlay, enthaltend einen mit Fasern versetzten duroplastischen Kunststoff,
- einer Trägerplatte aus Holzwerkstoff,
- einer Dämmschicht und
- einem Gegenzug, enthaltend einen duroplastischen Kunststoff, der zwischen Trägerplatte und Dämmschicht angeordnet ist, sieht vor,
- das Anordnen von Overlay, Trägerplatte, Gegenzug und Dämmschicht zwischen zwei Pressblechen, wobei die Dämmschicht auf einem Pressblech aufliegt, und die Temperatur des Pressblechs, das auf das Overlay einwirkt, niedriger ist, als die Temperatur des Pressblechs, das auf die Dämmschicht und den Gegenzug einwirkt, und
- das Pressen von Overlay, Dämmschicht und Gegenzug zwischen zwei erhitzten Pressblechen, bei einer Temperatur und über eine Zeit, die das Aushärten von Overlay und Gegenzug gewährleistet, wodurch der Gegenzug die Dämmschicht an die Trägerplatte bindet.

Dies findet erfindungsgemäß in einem einzigen Arbeitsgang statt, der schon bisher zum Herstellen des Paneels erforderlich war. Das erfindungsgemäße schalldämmende Paneel kann bereitgestellt werden, ohne dass Anlagen, Verfahrensschritte oder - maßnahmen erforderlich sind, die über das bisher Übliche hinausgehen. Gegenzug und Dämmschicht sind dabei nicht miteinander verzahnt sondern sind durch das verfließende und aushärtende Kunstharz des Gegenzugs miteinander verbunden.

Es zählt -wie oben beschrieben- zum Stand der Technik, drei- oder mehrschichtige Paneele mit Overlay, ggf. Dekorpapier, Trägerplatte und Gegenzug in einer Kurztaktpresse bei Temperaturen von ca. 130 °C bis ca. 200°C herzustellen. Ein Presszyklus, also das Einschichten von Overlay, ggf. Dekorpapieren, Trägerplatte und Gegenzug, das Schließen der Presse, das Einwirken der einander gegenüberliegenden, erhitzten Pressbleche auf Overlay bzw. den Gegenzug und das mindestens weitgehende Aushärten der Duroplaste, die in Overlay und Gegenzug enthalten sind, sowie das Austragen der laminierten Holzwerkstoffplatten beträgt ca. 20 Sekunden bis ca. 30 Sekunden. Variationen und Abweichungen von den vorgenannten Temperaturen und Zeiten können sich je nach dem Material der Trägerplatte, der Art oder Mischung der Duroplaste und der Stärke der einzelnen Schichten ergeben.

Es hat sich herausgestellt, dass eine Dämmschicht zwischen Gegenzug und erhitzter Pressplatte eingelegt werden kann, ohne dass die Qualität des Laminats, die durch das einwandfreie Aushärten von Overlay und Gegenzug wesentlich bestimmt wird, beeinträchtigt wird. Auf diese Weise wird in einem ohnehin bereits durchgeführten Arbeitsgang ein schalldämmendes Paneel hergestellt.

Die Dämmschicht verbindet sich beim Aushärten des Gegenzugs mit dem unter Einwirkung erhöhter Temperatur zunächst aufschmelzenden und dann aushärtenden Duroplasten, so wie sich auch die Trägerplatte mit dem Gegenzug verbindet. Der Gegenzug nimmt nach wie vor die Kräfte auf, die durch das Aushärten des Overlays verursacht werden. Es entsteht ein qualitativ hochwertiges, vollständig ebenes Produkt ohne Schwachstellen hinsichtlich der akustischen Dämmwirkung.

DasEinwirken des erhitzten Pressblechs auf die Dämmschicht bewirkt eine vollflächige Verbindung von Gegenzug und Dämmschicht, so dass die Bildung von unerwünschten Luftpolstern ausgeschlossen ist. Gleichzeitig hat sich herausgestellt, dass kein zusätzlicher Klebstoff erforderlich ist. Der bereits jetzt eingesetzte Gegenzug ist ausreichend beidseitig mit duroplastischem Kunstharz ausgestattet, so dass das erfindungsgemäße Verfahren sich als besonders wirtschaftlich erweist.

Erfindungsgemäß ist die Temperatur des Pressblechs, das auf das Overlay einwirkt, niedriger als die Temperatur des Pressblechs, das auf Dämmschicht und Gegenzug einwirkt. Durch diese Maßnahme wird gewährleistet, dass das Erhitzen des im Gegenzug enthaltenen Duroplasten zeitgleich mit dem Erhitzen des im Overlay enthaltenen Duroplasten erfolgt. Das Einstellen der optimalen Temperaturen der einzelnen Pressbleche erfolgt in Abhängigkeit von Material und Stärke der Dämmschicht, die sich zwischen Gegenzug und Pressblech befindet und kann durch einfache Optimierungsversuche ermittelt werden. Die Temperaturdifferenz zwischen den beiden Pressblechen kann zwischen 3 °C und 25 °C betragen, sie wird häufig zwischen 5 °C und 15°C liegen.

Häufig verwendete Kunstharze sind Phenol-Formaldehydharze (Phenoplaste) und Aminoplaste wie Melaminharze und Harnstoff-Formaldehydharze. Dem Fachmann sind die zum Laminieren von Holzwerkstoffplatten geeigneten Kunstharze oder Kunstharz-Mischungen bekannt, sie werden hier nicht näher erläutert. Overlay und Gegenzug bestehen nicht allein aus Kunstharz, da der Kunstharzfilm beim Aushärten reißt. Overlay und Gegenzug sind durch Fasern verstärkt, entweder dadurch, dass ein Trägerpapier mit Duroplasten imprägniert wird, wobei das imprägnierte Papier, ggf. noch mit einem Dekorpapier versehen, dann getrocknet und in dieser getrockneten Form als sogenanntes Overlay zum Laminieren von Holzwerkstoffplatten eingesetzt wird. In gleicher Weise - wenn auch meist ohne Dekorpapier- kann ein Gegenzug hergestellt werden. Alternativ kann das Overlay aus einem flüssig auf die Trägerplatte aufgebrachten, duroplastischen Kunstharz hergestellt werden, in das Fasern eingemischt sind.

Für das erfindungsgemäße Verfahren wird als Dämmschicht bevorzugt lignocellulosehaltiges Material, textiles Material, Kunststoff, Glas- oder Steinfasermaterial eingesetzt. Grundsätzlich ist jedes Material geeignet, das schalldämmende Eigenschaften besitzt, und dass unter den Arbeitsbedingungen beständig ist. Häufig sind dies Werkstoffe, die eine Dichte von mehr als 50 kg/m3 bis unter 700 kg/m₃ aufweisen, und deren geringes Gewicht gute akustische Dämmeigenschaften mit sich bringt. Papier, Pappe, Karton oder andere bahnförmige Werkstoffe, gewobene, gefilzte oder non-woven Bahnen aus natürlichen und/oder synthetischen Textilfasern, aus Glasfasern oder aus mineralischen Fasern, sogenannten Steinfasern, die zum Zwecke der Isolierung eingesetzt werden, aber auch Bahnen aus Kunststoff sind für die Verwendung als Dämmschicht geeignet.

Die Bahnen können papierdünn, also 10 Mikrometer stark sein, sie können aber auch bis zu 20 mm stark sein. Üblich sind Materialstärken für die Dämmschicht von 0,1 mm bis 5 mm, besonders häufig werden Dämmschichten mit einer Materialstärke von 1 mm bis 2 mm eingesetzt. Neben den vorgenannten Materialien jeweils in reiner Form können auch Mischungen von Werkstoffen eingesetzt werden. Beispielsweise Papier oder Pappe mit Kunststoffanteilen oder Non-wovens, z. B. aus trocken gestreuten, anschließend genadelten lignocellulosehaltigen Fasern, in die Füllkörper aus Kunststoff oder Mineralien eingestreut sind. Bei Prüfungen der erfindungsgemäß hergestellten Paneele hat sich herausgestellt, dass schon die dünnen Beschichtungen mit Kunststoffbahnen oder Bahnen aus Papier, Glas- oder Steinfasern signifikante Verbesserungen der schalldämmenden Eigenschaften bewirken. Die Verarbeitung der Dämmschicht in der Kurztaktpresse mindert die schalldämmenden Eigenschaften des Paneels nicht.

Nach einer weiter bevorzugten Ausführung des erfindungsgemäßen Verfahrens ist die Dämmschicht mehrlagig. Kunststoffbeschichtetes Papier oder dünne Glasfasermatten, die auf einer oder zwei Flächen von einem Papier abgedeckt sind, sind nur zwei Beispiele für solche mehrlagigen Dämmschichten. Dämmschichten können mehrere Lagen aufweisen, wenn dadurch eine verbesserte Schalldämmung erreicht wird. Es können aber auch Werkstoffe eingesetzt werden, die ohne eine Umhüllung aus wärmebeständigem Material den Bedingungen der Kurztaktpresse nicht standhalten.

Typische Dämmschichten können folgende Lagen aufweisen:
- ein mit Polyethylenschaum beschichtetes Papier, bei dem das Papier bevorzugt am Pressblech anliegt.
- ein beidseitig mit Papier umhüllter Polyethylenschaum
- eine mit plastisch verformbarem Kunststoff beschichtete Lage aus Papier, Karton oder Kunststoff (z. B. Polyethylenfolie)

Die Dämmschicht wirkt -je nach Material mehr oder weniger stark- wie eine Isolierschicht, die den Wärmeübergang vom Pressblech auf den Gegenzug verringert. Nach einer vorteilhaften Ausführung des erfindungsgemäßen Verfahrens wird die Dämmschicht vor dem Anordnen auf dem Pressblech mit einer wärmeleitenden Flüssigkeit, meist Wasser oder einer wässrigen Lösung besprüht. Die Flüssigkeit, die in Abstimmung auf das Material der Dämmschicht gewählt wird, kann Wasser oder eine Salzlösung sein. Sie bewirkt eine schnellere Wärmeleitung. Dadurch kann entweder das Verfahren beschleunigt durchgeführt werden oder die Temperatur des auf die Dämmschicht und den Gegenzug einwirkenden Pressblechs kann verringert werden.

Schließlich kann das erfindungsgemäße Verfahren bei Bedarf mit einem Pressblech durchgeführt werden, das glatt oder strukturiert ist. Für einige Werkstoffe, die die Dämmschicht bilden, kann die schalldämmende Wirkung verbessert werden, wenn die Außenseite der Dämmschicht, die von der Trägerplatte abgewandt ist, mit einer Prägestruktur versehen wird. Dies geschieht durch die Verwendung entsprechend negativ geprägter Pressbleche, die der Dämmschicht in der Kurztaktpresse die gewünschte Struktur verleihen. Das Erzeugen von Bereichen unterschiedlicher Dichte in der Dämmschicht bewirkt eine verbesserte Dämmwirkung.

Durch das vorbeschriebene Verfahren und seine Abwandlungen, Ergänzungen oder Erweiterungen kann entweder unmittelbar das einzelne Paneel hergestellt werden, das zur Verleimung oder mit einem Kantenprofil versehen zur mechanischen Verriegelung vorgesehen ist. Bevorzugt wird jedoch zunächst eine Holzwerkstoffplatte mit der erfindungsgemäß angebrachten Dämmschicht laminiert, die anschließend in einzelne Paneele zerteilt wird.

Weiter offenbart ist ein Paneel, aufweisend
- eine Trägerplatte aus Holzwerkstoff,
- ein flüssig auf die Trägerplatte aufgebrachtes Overlay, enthaltend einen mit Fasern versetzten duroplastischen Kunststoff,
- eine Dämmschicht und
- einen Gegenzug, enthaltend einen mit Fasern versetzten duroplastischen Kunststoff, zwischen Trägerplatte und Dämmschicht angeordnet ist.

Aus dem Stand der Technik sind -wie eingangs beschrieben- zahlreiche Paneele bekannt, bei denen ein Klebstoff die Dämmschicht an eine Holzwerkstoffplatte bindet. Keiner der im Stand der Technik beschriebenen Klebestoffe ist ein Gegenzug, also ein mit Fasern versetzter Duroplast, der vollständig ausgehärtet ist. Da der eingesetzte Duroplast nur unter Einwirkung von erhöhter Temperatur und in der Regel von erhöhtem Druck aushärtet, setzt der Einsatz von Duroplasten den Einsatz einer Presse voraus. Der Einsatz einer Presse wird zum Aufbringen der Dämmschicht auf die Holzwerkstoffplatte nicht beschrieben. Als besonderer Vorteil des Paneels ist anzusehen, dass die Dämmschicht auf der Unterseite der Holzwerkstoffplatte ohne weitere Nachbearbeitung einen ästhetisch ansprechenden Eindruck macht, was sich durch die Wirkung des Pressblechs erklärt. Weiter wird die Dämmschicht exakt bündig zur Trägerplatte profiliert, was Hohlräume minimiert und optisch besser wirkt.

Aus den vorstehend beschriebenen Gründen, insbesondere der verbesserten Schalldämmung, ist ein Paneel bevorzugt, bei dem die Dämmschicht mehrlagig ist.

Die Dämmschicht des schalldämmenden Paneels weist vorteilhaft lignocellulosehaltiges Material, wie Papier, Pappe oder Karton, aber auch dünne, weiche Faserplatten, aber auch textiles Material, Kunststoff, Glas- oder Steinfasermaterial auf oder besteht ausschließlich aus diesen Werkstoffen. Mischungen dieser Werkstoffe können ebenfalls gut geeignet sein, dem Paneel schalldämmende Eigenschaften zu verleihen.

Die schalldämmende Wirkung der Dämmschicht wird weiter unterstützt, wenn die Dämmschicht eine glatte oder eine profilierte Außenseite aufweist.

Das Paneel hat deshalb besonders gute schalldämmende Eigenschaften, weil die Dämmschicht die Unterseite der Holzwerkstoffplatte vollständig abdeckt, so dass keine Lücken oder Hohlräume entstehen, die die schallmindernde Wirkung der Dämmschicht herabsetzen könnten.

Details der Erfindung werden im Folgenden an Hand von Ausführungsbeispielen erläutert. Es zeigen:
- Fig.1:: eine schematische Querschnittsdarstellung einer ersten Ausuhrungsform eines schalldämmenden Paneels in einer Kurztaktpresse
- Fig. 2:: eine schematische Querschnittsdarstellung einer zweiten Ausführungsform eines schalldämmenden Paneels.

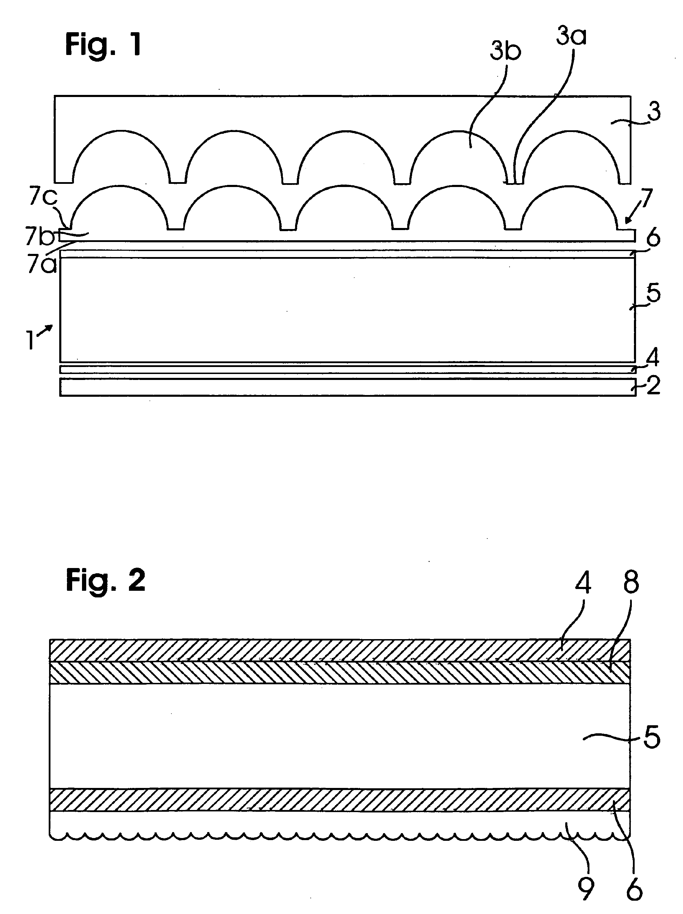

Fig. 1 zeigt eine schichtweise Anordnung 1 von Werkstoffen, die zwischen den Pressblechen 2, 3 zu einem schalldämmenden Paneel verpresst werden sollen. Die schichtweise Anordnung 1 setzt sich (von unten) zusammen aus einem Overlay 4, hier einem melaminharzgetränkten Papier. Das Papier ist mit einem Dekor bedruckt. Das Overlay 4 bildet später die Oberseite des schalldämmenden Paneels. Auf dem Overlay 4 liegt eine hochdichte Faserplatte (HDF-Platte) 5 von 8 mm Stärke. Auf der HDF-Platte 5 liegt der Gegenzug 6, ein melaminharzgetränktes Papier. Auf dem Gegenzug 6 liegt eine dreischichtige Dämmlage 7 aus einer ersten Polyethylenfolie 7a, einem hitzebeständigen, plastisch formbaren Material 7b und einer zweiten Polyethylenfolie 7c. Die erste PE-Folie 7a liegt auf dem Gegenzug. Das hitzebeständige, plastisch formbare Material 7b mit einer Stärke von 1,5 mm wird von der zweiten PE-Folie 7c abgeschlossen, die die Außenseite der Dämmlage 7 bildet. Die Dämmlage 7 ist dreilagig aufgebaut, die drei Schichten 7a, 7b und 7c sind jedoch zu einer Einheit vorgefertigt.

Die Anordnung 1 ist also in der Weise in Schichten übereinander angeordnet, dass die spätere Oberseite des laminierten Paneels (Overlay, 4) unten liegt, während die spätere Unterseite des laminierten Paneels (Dämmlage 7 mit Gegenzug 6) oben liegt. Das erste Pressblech 2 ist unter dem Overlay 4 angeordnet. Das zweite Pressblech 3 ist über der Dämmlage 7, über dem hitzebeständigen, plastisch formbaren Material 7b angeordnet. Das zweite Pressblech 3 ist auf der der Dämmlage 7 zugewandten Seite mit einer Struktur versehen, die aus Stegen 3a besteht, zwischen denen Ausnehmungen 3b angeordnet sind. Die Tiefe der Ausnehmungen beträgt 1,3 mm.

Das Paneel wird wie folgt hergestellt: Die vorstehend beschriebene Anordnung 1 wird zwischen den Pressblechen 2 und 3 ausgerichtet. Das untere Pressblech 2 ist auf 165 °C aufgeheizt, das obere, strukturierte Pressblech 3 ist auf 175 °C aufgeheizt. Die Pressbleche schließen und üben über 22 Sekunden einen Druck von 30 kg/cm² bis 40 kg/cm² auf die Anordnung 1 aus. In dieser Zeit verflüssigt sich der in Overlay 4 und Gegenzug 6 enthaltene Duroplast zunächst und härtet dann aus. Beim Aushärten entsteht eine feste Verbindung zur Trägerplatte 5 einerseits und beim Gegenzug 6 zur Dämmlage 7 andererseits. Der Vorgang des Aushärtens läuft auf beiden Seiten der Trägerplatte synchron ab, da die um 10 °C höhere Temperatur des oberen Pressblechs 3 einen schnelleren Wärmeübergang gewährleistet, der die verzögernde Wirkung der Dämmlage 7 kompensiert. Gleichzeitig verleiht die aus Stegen 3a und Ausnehmungen 3b bestehende Struktur des oberen Pressblechs 3 dem plastisch verformbaren, hitzebeständigen Material 7b der Dämmlage durch die zweite PE-Folie7c hindurch, die ebenfalls verformt wird, eine Struktur, die aus polsterartigen Erhebungen besteht (die von den Ausnehmungen 3b geformt werden), voneinander abgegrenzt durch Prägungen (die von den Stegen 3a geformt werden). Diese polsterartige Struktur der Dämmlage 7 ist gebrauchsfertig und bleibt während der Nutzungsdauer des Paneels erhalten. Die Prägungen, die von den Stegen 3b geformt werden, sind zu klein, als dass sie die dämmende Wirkung der Dämmlage beeinträchtigen können. Sie verbessern die Dämmwirkung der Dämmschicht und stellen zudem eine ästhetisch ansprechende Unterseite des Paneels dar.

Nach dem Abschluss des Aushärtens der Duroplaste werden die Pressbleche 2 und 3 auseinander gefahren. Die Anordnung 1 ist nun zu einer laminierten HDF-Platte geworden. Diese laminierte HDF-Platte wird nun gekühlt, ggf. noch gelagert bis Spannungen abgebaut sind, die durch den Pressvorgang aufgebaut wurden. Die fertige HDF-Platte ist eben, obwohl die Dämmlage 7 auf den Gegenzug 4 auflaminiert wurde. Das Aufbringen einer vierten Schicht mit einer Stärke von immerhin 1,5 mm widerspricht der Theorie, dass Holzwerkstorfplatten am besten aus einer ungeraden Anzahl von Schichten aufgebaut sein sollen, um Spannungen und damit ein Verziehen der Platte zu minimieren. Trotzdem zeigt sich hier, dass die Platte eben und damit als Wand-, Decken- oder insbesondere Fußbodenbelag geeignet ist.

Die laminierte HDF-Platte wird nun aufgeteilt in einzelne Paneele. Je nach Bedarf können diese Paneele mit Kantenprofilen zur mechanischen Verriegelung versehen werden oder die Kanten können für eine Verlegung unter Verwendung von Leim vorbereitet werden. Werden die Kanten des Paneels profiliert, so lässt sich die Dämmlage 7 ohne störende Effekte bearbeiten, soweit die Unterseite des Paneels zu profilieren ist.
Es ist aus dem Vorstehenden ersichtlich, dass zum Herstellen des schalldämmenden Paneels nicht ein Arbeitsgang oder eine Vorrichtung mehr erforderlich ist als bisher zur Herstellung eines ungedämmten Paneels.

Fig. 2 zeigt ein zweites Ausführungsbeispiel für den Aufbau eines schallgedämmten Paneels. Von oben nach unten sind folgende Schichten aufeinander laminierte: die in der Gebrauchslage des Paneels oberste Schicht wird von dem Overlay 4 gebildet, dessen Duroplast beim Aushärten auch ein unter dem Overlay 4 angeordnetes Dekorpapier 8 mit der Trägerplatte 5 verbindet. Die Trägerplatte 5 (ebenfalls eine HDF-Platte von 8 mm Stärke) ist unter dem Dekorpapier 8 angeordnet. Die Trägerplatte 5 liegt auf dem Gegenzug 6 und ist mit diesem verbunden. Der Gegenzug 6 bindet auf seiner von der Trägerplatte 5 abgewandten Seite einen Maschinenkarton 9 als Dämmschicht. Der Maschinenkarton 9 hat eine Stärke von 1 mm und ein Gewicht von 700 kg/m3.

Zum Herstellen dieses schalldämmenden Paneels wird dieselbe Presse mit denselben Pressblechen 2 und 3 eingesetzt wie zuvor im Zusammenhang mit der Fig. 1 erläutert.

## Patentansprüche

1. Verfahren zum Herstellen eines schalldämmenden Paneels mit
- einem Overlay, enthaltend einen mit Fasern versetzten, duroplastischen Kunststoff,
- einer Trägerplatte aus Holzwerkstoff,
- einer Dämmschicht und
- einem Gegenzug, enthaltend einen duroplastischen Kunststoff, der zwischen Trägerplatte und Dämmschicht angeordnet ist,
mit den Schritten
- Anordnen von Overlay, Trägerplatte, Gegenzug und Dämmschicht zwischen zwei Pressblechen, wobei die Dämmschicht auf einem Pressblech aufliegt, und die Temperatur des Pressblechs, das auf das Overlay einwirkt, niedriger ist, als die Temperatur des Pressblechs, das auf die Dämmschicht und den Gegenzug einwirkt, und
- Pressen von Overlay, Dämmschicht und Gegenzug zwischen zwei erhitzten Pressblechen, auf eine Temperatur und über eine Zeit, die das Aushärten von Overlay und Gegenzug gewährleistet, wodurch der Gegenzug die Dämmschicht an die Trägerplatte bindet.

2. Verfahren nach einem der vorangehenden Ansprüche, **dadurch gekennzeichnet, dass** die Dämmschicht lignocellulosehaltiges Material, textiles Material, Kunststoff, Glas - oder Steinfasermaterial aufweist oder daraus besteht.

3. Verfahren nach Anspruch 1, **dadurch gekennzeichnet, dass** die Dämmschicht mehrlagig ist.

4. Verfahren nach einem der vorstehenden Ansprüche, dadurch gekenntzeichnet, dass die Dämmschicht vor dem Anordnen auf dem Pressblech mit einer wärncleitenden Flüssigkeit besprüht wird.

5. Verfahren nach einem der vorstehenden Ansprüche, **dadurch gekennzeichnet, dass** ein Pressblech glatt oder strukturiert ist.

## Claims

1. method for producing a sound absorbing panel with
- an overlay, containing a duroplastic plastic offset with fibers,
- a carrier plate made of a wood material,
- an insulating layer and
- a countertraction, containing a duroplastic plastic, which is arranged between the carrier plate and the insulating layer,
with the steps
- arrangement of overlay, carrier plate, countertraction and insulating layer between two pressing plates, wherein the insulating layer lies on a pressing plate, and the temperature of the pressing plate, which acts on the overlay, is lower than the temperature of the pressing plate, which acts on the insulating layer and the countertraction, and
- pressing of overlay, insulating layer and countertraction between two heated pressing plates, to a temperature and over a period, which ensures the hardening of overlay and countertraction, whereby the countertraction binds the insulating layer to the carrier plate.

2. The method according to one of the previous claims, **characterized in that** the insulating layer has or is made of lignocellulose-containing material, textile material, plastic, glass or stone-fiber material.

3. The method according to claim 1, **characterized in that** the insulating layer has multiple layers.

4. The method according to one of the previous claims, **characterized in that** the insulating layer is sprayed with a heat-conducting liquid before arrangement on the pressing plate.

5. The method according to one of the previous claims, **characterized in that** a pressing plate is smooth or structured.

## Revendications

1. Procédé de fabrication d'un panneau isolant comportant
- un revêtement contenant un matériau synthétique duroplastique garni de fibres,
- une plaque support en matériau bois,
- une couche isolante et
- une contre-traction, contenant un matériau synthétique duroplastique, qui est agencée entre la plaque support et la couche isolante,
comprenant les étapes suivantes
- agencement du revêtement, de la plaque support, de la contre-traction et de la couche isolante entre deux tôles embouties, la couche isolante reposant sur une tôle emboutie, et la température de la tôle emboutie qui agit sur le revêtement, est inférieure à la température de la tôle emboutie qui agit sur la couche isolante et sur la contre-traction, et
- pressage du revêtement, de la couche isolante et de la contre-traction entre deux tôles embouties chauffées, à une température et pendant un délai garantissant le durcissement du revêtement et de la contre-traction, la contre-traction liant la couche isolante à la plaque support.

2. Procédé selon une des revendications précédentes, **caractérisé en ce que** la couche isolante comprend ou est formée de matériau lignocellulosique, matériau textile, matériau synthétique, matériau en verre ou en laine de roche.

3. Procédé selon la revendication 1, **caractérisé en ce que** la couche isolante est multicouche.

4. Procédé selon une des revendications précédentes, **caractérisé en ce que** la couche isolante est aspergée, avant l'agencement sur la tôle emboutie, d'un liquide thermoconducteur.

5. Procédé selon une des revendications précédentes, **caractérisé en ce qu'**une tôle emboutie est lisse ou structurée.
